# EUROPEAN PATENT SPECIFICATION

(11) **EP 2 889 794 B1**
(45) Date of publication and mention of the grant of the patent: **04.03.2020**
(21) Application number: 14194144.3
(22) Date of filing: 20.11.2014
(51) Int. Cl.: G06F 21/53, G06F 21/74

(54) **Offloading functionality from a secure processing environment**
Abladungsfunktionalität von einer sicheren Verarbeitungsumgebung
Fonctionnalité de déchargement d'un environnement de traitement sécurisé

(30) Priority: 28.12.2013 US 201314142837
(43) Date of publication of application: 01.07.2015
(73) Proprietor: Intel Corporation, Santa Clara, CA 95054 (US)
(72) Inventor: Johnson, Simon, Beaverton, OR 97007 (US); Mckeen, Francis, Portland, OR 97229 (US); Scarlata, Vincent, Beaverton, OR 97006 (US); Rozas, Carlos, Portland, OR 97229 (US); Savagaonkar, Uday, Portland, OR 97229 (US); Goldsmith, Michael, Lake Oswego, OR 97034 (US); Brickell, Ernie, Hillsboro, OR 97124 (US)
(74) Representative: HGF Limited

(56) References cited:
- EP-A1- 2 863 329
- US-A1- 2009 313 695
- US-A1- 2013 159 726
- Carlos Rozas: "Intel Software Guard Extensions(Intel SGX)", , 6 November 2013 (2013-11-06), XP055198306, Retrieved from the Internet: URL:http://web.archive.org/web/20150302011 822/http://www.pdl.cmu.edu/SDI/2013/slides /rozas-SGX.pdf [retrieved on 2015-06-25]

## Description

### BACKGROUND

### 1. Field

The present disclosure pertains to the field of information processing, and more particularly, to the field of security in information processing systems.

### 2. Description of Related Art

Confidential information is stored, transmitted, and used by many information processing systems. Therefore, techniques have been developed to provide for the secure handling and storing of confidential information. These techniques include various approaches to creating and maintaining a secured, protected, or isolated container, partition, or environment within an information processing system.

"Intel Software Guard Extensions (Intel SGX)", Carlos Rozas, Intel Labs, 6 November 2013 describes secure enclaves.

EP 2863329 A1 describes methods for establishing physical locality between secure execution environments. In one embodiment, a processor includes a storage location and an execution core. The storage location is to store a locality nonce. The execution core is to execute a first instruction to create a secure execution environment. The execution core is also to execute, from within the secure execution environment, a second instruction to read the locality nonce from the storage location.

### Brief Description of the Figures

The present invention is illustrated by way of example and not limitation in the accompanying figures.
Figure 1 illustrates a system for offloading functionality from a secure processing environment according to an embodiment of the present invention.
Figure 2 illustrates a processor for offloading functionality from a secure processing environment according to an embodiment of the present invention.
Figure 3 illustrates an enclave page cache according to an embodiment of the present invention.
Figure 4 illustrates a method for feature licensing in a secure processing environment according to an embodiment of the present invention.

### Detailed Description

Embodiments of an invention for offloading functionality from a secure processing environment are described. In this description, numerous specific details, such as component and system configurations, may be set forth in order to provide a more thorough understanding of the present invention. It will be appreciated, however, by one skilled in the art, that the invention may be practiced without such specific details. Additionally, some well-known structures, circuits, and other features have not been shown in detail, to avoid unnecessarily obscuring the present invention.

In the following description, references to "one embodiment", "an embodiment", "example embodiment", "various embodiments", etc., indicate that the embodiment(s) of the invention so described may include particular features, structures, or characteristics, but more than one embodiment may and not every embodiment necessarily does include the particular features, structures, or characteristics. Further, some embodiments may have some, all, or none of the features described for other embodiments.

As used in the claims, unless otherwise specified the use of the ordinal adjectives "first", "second", "third", etc. to describe an element merely indicate that a particular instance of an element or different instances of like elements are being referred to, and is not intended to imply that the elements so described must be in a particular sequence, either temporally, spatially, in ranking, or in any other manner.

Also, the terms "bit", "flag", "field", "entry", "indicator", etc., may be used to describe any type of storage location in a register, table, database, or other data structure, whether implemented in hardware or software, but are not meant to limit embodiments of the invention to any particular type of storage location or number of bits or other elements within any particular storage location. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments of the present invention to any particular logical convention, as any logical convention may be used within embodiments of the present invention.

As described in the background section, various approaches to creating and maintaining a secured, protected, or isolated container, partition, or environment within an information processing system have been developed. One such approach involves secure enclaves as described in the co-pending U.S. Patent Application entitled "Method and Apparatus to Provide Secure Application Execution", filed June 19, 2012, Serial No. 13/527,547, published as US 2013/0159726 A1, which provides information regarding at least one embodiment of a secured, protected, or isolated container, partition, or environment. However, this reference is not intended to limit the scope of embodiments of the invention in any way and other embodiments may be used while remaining within the scope of the present invention. Therefore, any instance of any secured, protected, or isolated container, partition, or environment used in any embodiment of the present invention may be referred to herein as a secure enclave or an enclave.

Embodiments of the present invention may provide for offloading functionality from a secure enclave, such that the functionality is performed by hardware or software executing outside of the enclave for an application executing inside the enclave. For example, it may be more efficient to perform a cryptographic protocol outside of the enclave instead of inside the enclave according to an embodiment of the present invention.

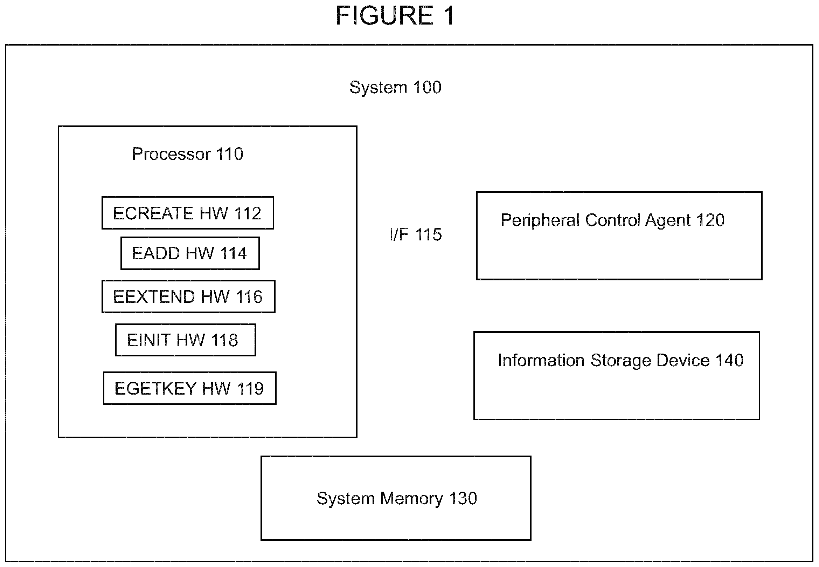

Figure 1 illustrates system 100, an information processing system in which functionality may be offloaded from a secure processing environment according to an embodiment of the present invention. System 100 may represent any type of information processing system, such as a server, a desktop computer, a portable computer, a set-top box, a hand-held device such as a tablet or a smart phone, or an embedded control system. System 100 includes processor 110, peripheral control agent 120, system memory 130, and information storage device 140. Systems embodying the present invention may include any number of each of these components and any other components or other elements, such as peripherals and input/output devices. Any or all of the components or other elements in this or any system embodiment, may be connected, coupled, or otherwise in communication with each other through any number of buses, point-to-point, or other wired or wireless interfaces or connections, unless specified otherwise. Any components or other portions of system 100, whether shown in Figure 1 or not shown in Figure 1, may be integrated or otherwise included on or in a single chip (a system-on-a-chip or SOC), die, substrate, or package.

Peripheral control agent 120 may represent any component including or through which peripheral, input/output, or other components or devices may be connected or coupled to processor 110, such as a chipset. System memory 130 may be dynamic random access memory or any other type of medium readable by processor 110. Information storage device 140 may include any type of persistent or non-volatile memory or storage, such as a flash memory and/or a solid state, magnetic, or optical disk drive.

Processor 110 may represent one or more processors integrated on a single substrate or packaged within a single package, each of which may include multiple threads and/or multiple execution cores, in any combination. Each processor represented as or in processor 110 may be any type of processor, including a general purpose microprocessor, such as a processor in the Intel® Core® Processor Family, Intel® Atom® Processor Family, or other processor family from Intel® Corporation, or another processor from another company, or a special purpose processor or microcontroller.

Processor 110 may operate according to an instruction set architecture that includes a first instruction to create a secure enclave, a second instruction to add content to an enclave, a third instruction to measure content of an enclave, a fourth instruction to initialize an enclave, and a fifth instruction to get a key to be used to offload functionality. Although embodiments of the present invention may be practiced with a processor having any instruction set architecture and are not limited to the architecture of a processor family from Intel® Corporation, the instructions may be part of a set of software protection extensions to an existing architecture, and may be referred to herein as an ECREATE instruction, an EADD instruction, an EEXTEND instruction, an EINIT instruction, and an EGETKEY instruction respectively. Support for these instructions may be implemented in a processor using any combination of circuitry and/or logic embedded in hardware, microcode, firmware, and/or other structures arranged as described below or according to any other approach, and is represented in Figure 1 as ECREATE hardware 112, EADD hardware 114, EEXTEND hardware 116, EINIT hardware 118, and EGETKEY hardware 119.

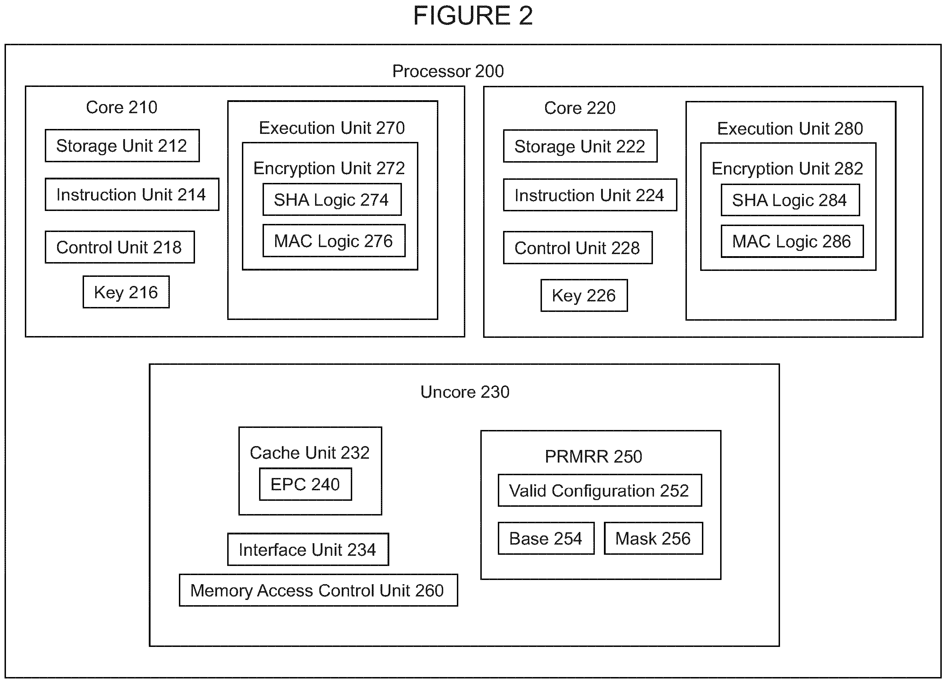

Figure 2 illustrates processor 200, an embodiment of which may serve as processor 110 in system 100. Processor 200 may include core 210, core 220, and uncore 230. Core 210 may include storage unit 212, instruction unit 214, execution unit 270, control unit 218, and key 216. Core 220 may include storage unit 222, instruction unit 224, execution unit 270, control unit 228, and key 226. Uncore 230 may include cache unit 232, interface unit 234, processor reserved memory range registers 250, and memory access control unit 260. Processor 200 may also include any other circuitry, structures, or logic not shown in Figure 2. The functionality of the ECREATE hardware 112, the EADD hardware 114, the EEXTEND hardware 116, the EINIT hardware 118, and the EGETKEY hardware 119, as introduced above and further described below, may be distributed among any of the labeled units or elsewhere in processor 200.

Storage units 212 and 222 may include any combination of any type of storage usable for any purpose within cores 210 and 220, respectively; for example, they may include any number of readable, writable, and/or read-writable registers, buffers, and/or caches, implemented using any memory or storage technology, for storing capability information, configuration information, control information, status information, performance information, instructions, data, and any other information usable in the operation of cores 210 and 220, respectively, as well as circuitry usable to access such storage.

Instruction units 214 and 224 may include any circuitry, logic, structures, and/or other hardware for fetching, receiving, decoding, interpreting, and/or scheduling instructions to be executed by cores 210 and 220, respectively. Any instruction format may be used within the scope of the present invention; for example, an instruction may include an opcode and one or more operands, where the opcode may be decoded into one or more micro-instructions or micro-operations for execution by execution unit 216 or 226, respectively. Instructions, such as the ECREATE, EADD, EEXTEND, and EINIT instructions, may be leaves of a single opcode, such as a privileged secure enclave opcode (e.g., ENCLS), where the leaf instructions are specified by the value in a processor register (e.g., EAX). Instructions, such as the EGETKEY instruction, may be also be leaves of a single opcode, such as an unprivileged secure enclave opcode (e.g., ENCLU), where the leaf instructions are also specified by the value in a processor register (e.g., EAX). Operands or other parameters may be associated with an instruction implicitly, directly, indirectly, or according to any other approach.

Execution units 270 and 280 may include any circuitry, logic, structures, and/or other hardware, such as arithmetic units, logic units, floating point units, shifters, etc., for processing data and executing instructions, micro-instructions, and/or micro-operations. Execution units 270 and 280 may include dedicated circuitry, logic, structures, and/or other hardware for measuring data according to embodiments of the present invention or any such measurements may be performed with shared circuitry, logic, structures, and/or other hardware in execution unit 270 and 280 and/or elsewhere in processor 200. Execution units 270 and 280 may include encryption units 272 and 282 respectively.

Encryption units 272 and 282 may represent any circuitry, logic, structures, and/or other hardware to execute any one or more encryption algorithm, the corresponding decryption algorithms, and/or hashing algorithms. Encryption units 272 and 282 may include SHA logic 274 and 284, respectively, to implement a secure hash algorithm such as SHA-256, SHA-512, SHA-3, or SM3, and/or MAC logic 276 and 286, respectively, to generate a method authentication code (MAC), such as an Advanced Encryption Standard Cipher-based MAC (AES-CMAC), and/or any of SHA logic 274, SHA logic 284, MAC logic 276, and MAC logic 286 may represent any dedicated or shared circuitry, logic, structures, and/or other hardware elsewhere in processor 200 to perform these functions. For calculating MACs, MAC logic 276 and 286 may use key 216 and 226, respectively, each of which may represent any key, such as a processor or platform unique key programmed into processor 200 in a fuse array, generated during a boot process, and/or otherwise available as a secret key to be used in a MAC algorithm or for any other purpose.

Control units 218 and 228 may include any microcode, firmware, circuitry, logic, structures, and/or other hardware to control the operation of the units and other elements of cores 210 and 220, respectively, and the transfer of data within, into, and out of cores 210 and 220. Control units 218 and 228 may cause cores 210 and 220 and processor 200 to perform or participate in the performance of method embodiments of the present invention, such as the method embodiments described below, for example, by causing cores 210 and 220 to execute instructions received by instruction units 214 and 224 and micro-instructions or micro-operations derived from instructions received by instruction units 214 and 224.

Cache unit 232 may include any number of cache arrays and cache controllers in one or more levels of cache memory in a memory hierarchy of information processing system 100, implemented in static random access memory or any other memory technology. Cache unit 232 may be shared among any number of cores and/or logical processors within processor 200 according to any approach to caching in information processing systems. Cache unit 232 may also include one or more memory arrays to be used as enclave page cache (EPC) 240 as further described below.

Interface unit 234 may represent any circuitry, logic, structures, and/or other hardware, such as a link unit, a bus unit, or a messaging unit to allow processor 200 to communicate with other components in a system such as system 200 through any type of bus, point to point, or other connection, directly or through any other component, such as a bridge, hub, or chipset. Interface unit 234 may include one or more integrated memory controllers to communicate with a system memory such as system memory 130 or may communicate with a system memory through one or more memory controllers external to processor 200.

Processor reserved memory range registers (PRMRR) 250 may represent any one or more storage locations in storage units 212 and 222, elsewhere in processor 200, and/or copies thereof in uncore 230. PRMRR 250 may be used, for example by configuration firmware such as a basic input/output system, to reserve one or more physically contiguous ranges of memory called processor reserved memory (PRM). Memory access control unit 260 may represent any circuitry, structures, logic, and/or other hardware anywhere in processor 200 that may control access to PRM such that EPC 240 may be created within the system memory space defined as PRM.

In an embodiment, PRM is of a size that is an integer power of two, e.g. 32MB, 64MB, or 128MB, and is aligned to a memory address that is a multiple of that size. PRMRR 250 may include one or more instances of a read-only PRMMR valid configuration register 252 to indicate the valid sizes to which PRM may be configured, one or more instances of a PRMMR base register 254 and a PRMMR mask register 256 to define one or more base addresses and ranges of PRM.

EPC 240 is a secure storage area in which software may be protected from attacks by malware operating at any privilege level. One or more secure enclaves may be created such that each enclave may include one or more pages or other regions of EPC 240 in which to store code, data, or other information in a way that it may only be accessed by software running inside that enclave. For example, a secure enclave may be used by a software application so that only that software application, while running inside that enclave, may access the contents of that enclave. No other software, not even an operating system or a virtual machine monitor, may read the unencrypted contents of that enclave, modify the contents of that enclave, or otherwise tamper with the contents of that enclave while the content is loaded into the EPC (assuming that the enclave is a production enclave, as opposed to, for example, a debug enclave). However, the contents of the enclave may be accessed by software executing from within that enclave on any processor in system 100. This protection is accomplished by the memory access control unit 260 operating according to the secure enclaves architecture.

In Figure 2, EPC 240 is shown in cache unit 232, where it may be a sequestered portion of a shared cache or a dedicated memory. Within or on the same die as processor 200, EPC 240 may be implemented in static random access memory, embedded dynamic random access memory, or any other memory technology. EPC 240 may also or additionally be implemented external to processor 200, for example within a secure region of system memory 130. To protect the content of secure enclaves when it is not stored on-die, encryption units 272 and/or 282 may be used to encrypt the content before it is transferred off-die and to decrypt the content transferred back into EPC 240 on-die. Other protection mechanisms may also be applied to protect the content from replay and other attacks.

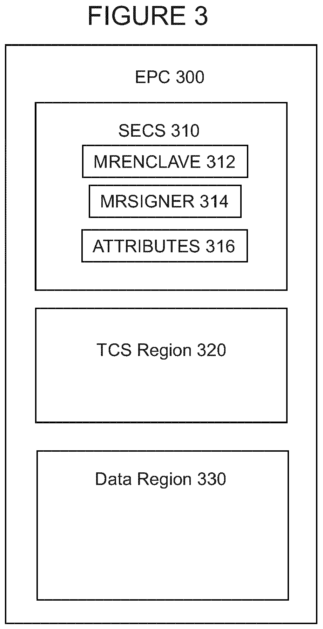

Figure 3 illustrates EPC 300, an embodiment of which may serve as EPC 240 in Figure 2. In Figure 3, EPC 300 includes secure enclave control structure (SECS) 310, thread control structure (TCS) region 320, and data region 330. Although Figure 3 shows EPC 300 divided into three separate regions, EPC 300 may be divided into any number of chunks, regions, or pages, each of which may be used for any type of content. In one embodiment, it is divided into 4 kilobyte (KB) pages and is aligned to an address in system memory 130 that is a multiple of 4KB, SECS 310 may be any one of the 4KB pages in EPC 300, TCS region 320 may be any number of contiguous or non-contiguous 4KB pages, and data region 330 may be any number of contiguous or non-contiguous 4KB pages. Furthermore, although Figure 3 shows one SECS, one TCS region, and one data region corresponding to one secure enclave, an EPC may include any number of SECS and any number of TCS and data regions, so long as each enclave has one and only one SECS, each valid TCS and valid data region (e.g., page) belongs to one and only one enclave, and all of the SECS, TCS, and data pages fit within the EPC (or may be paged out of and back into the EPC).

An SECS is created by the execution of the ECREATE instruction to contain metadata to be used by hardware, and accessible only by hardware (i.e., not readable, writable, or otherwise accessible by software, whether running inside or outside the enclave), to define, maintain, and protect the enclave. For example, SECS 310 includes a first measurement register (MRENCLAVE) 312, which may be any size field within SECS 310; in one embodiment, MRENCLAVE 312 may be 32 bytes. MRENCLAVE 312 is to store the build measurement (as described below) of the enclave, which is initialized by the ECREATE instruction, updated by every EADD and EEXTEND instruction associated with the enclave, and locked by the EINIT instruction associated with the enclave. SECS 310 also includes a second measurement register (MRSIGNER) 314 to store a measurement of an identifier, such as a public key, of the entity that verified the creation of the enclave, as further described below. In one embodiment, MRSIGNER 314 may be 32 bytes. Enclave attributes, as described below, may be stored in ATTRIBUTES field 316, which in one embodiment may have a size of 16 bytes.

One or more TCSs may also be associated with a secure enclave. A TCS contains metadata used by the hardware to save and restore thread specific information when entering and exiting the enclave.

The security attributes of each page are stored in a micro-architectural data structure called an enclave page cache map (EPCM) that is used by memory access control unit 260 to enforce the protections provided by the secure enclaves architecture. The EPCM stores one entry for each page in the EPC. Each entry includes an identifier (e.g., a 64 bit field) of the SECS (i.e., the enclave) to which the page belongs. These identifiers may be referred to by secure enclaves instructions (e.g., the address of the SECS may be stored in a register such as RCX, the address of a micro-architectural data structure including the address of the SECS may be stored in a register such as RBX, etc.) such as EADD, EEXTEND, and EINIT, to provide for the SECS to be read by hardware in order to execute the instruction.

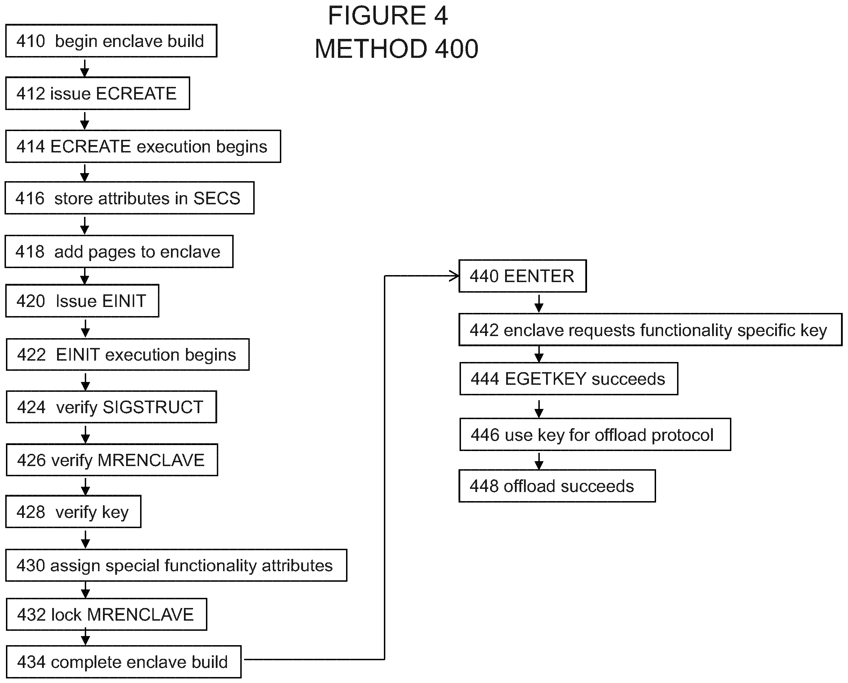

Figure 4 illustrates method 400, a method for offloading functionality from a secure processing environment according to an embodiment of the present invention. Although method embodiments of the invention are not limited in this respect, reference may be made to elements of Figures 1, 2, and 3 to help describe the method embodiment of Figure 4. Method 400 includes the building of a secure enclave using ECREATE, EADD, EEXTEND, and EINIT instructions, and a request for a key using an EGETKEY instruction; however, embodiments of the present invention are not limited to these specifically named instructions.

In box 410 of method 400, a build of an enclave begins. In box 412, an ECREATE instruction is issued, for example by an installer application, to create the enclave. In box 414, execution of the ECREATE instruction, for example by execution unit 270 or 280, begins. In one embodiment, execution of the ECREATE instruction includes the allocation of a range of addresses for use by the enclave. In one embodiment, the addresses may be a first type of address, for example a virtual or linear addresses, to be translated to a second type of address, for example a physical address in a system memory such as system memory 130.

Execution of the ECREATE instruction may also include, in box 416, establishing attributes of the enclave and storing the enclave attributes in an SECS, for example, in ATTRIBUTES field 316 of SECS 310. A micro-architectural data structure (e.g., PAGEINFO), may be associated with the ECREATE instruction (e.g., its address in the RBX register). PAGEINFO may have a field specifying the address of a source SECS to be copied to SECS 310. The source SECS may include a source SECS ATTRIBUTES bit array to be copied to SECS ATTRIBUTES field 316.

In box 418, the installer application may add one or more pages (or other regions) to the enclave, for example by issuing one or more EADD instructions, and have them measured, for example by issuing one or more EEXTEND instructions. Adding a page to the enclave may include copying a source page from system memory into the EPC and associating the EPC page with the enclave's SECS. The source page may be a regular page containing unencrypted code, data, or other information for the data region of the enclave, or the source page may be a TCS page containing data for the TCS region. Having them measured may include incrementally calculating or extending a cryptographic hash based on the content, location, and/or other attributes of the page or pages, and storing the hash in MRENCLAVE 312.

In box 420, the installer application issues an EINIT instruction in order to finalize the build of the enclave and initialize it. In one embodiment, EINIT is the leaf of ENCLS with the value 0x2 in the EAX register. In box 422, execution of the EINIT instruction, for example by execution unit 270 or 280, begins.

Execution of the EINIT instruction may include, in box 424, verifying that an enclave certificate or signature structure (SIGSTRUCT) provided by the installer or signer of the enclave is valid by using the using a key included in the certificate or signature structure. Execution of the EINIT instruction may also include, in box 426, verifying that the contents of MRENCLAVE 312 matches the expected value of MRENCLAVE provided in the certificate or signature structure, where the final value of MRENCLAVE 312 may be a unique SHA-256 digest that identifies, cryptographically, the code and data placed inside the enclave, the position and placement order of the pages inside the enclave, and the security properties of each page.

Execution of the EINIT instruction also include, in box 428, verifying that the key provided in the certificate or signature structure matches a key that permits special functionality to be offloaded, e.g., a key embedded in the hardware. Successful validation of the certificate structure and verification of MRENCLAVE (along with any other desired checks) and the key results, in box 430, in the assignment of special functionality attributes (which may be provided in the certificate or signature structure) to the enclave, for example by setting one or more special functionality bits in SECS ATTRIBUTES field 316, where the SECS may be associated with the EINIT instruction (e.g., its address in ECX).

In box 432, execution of the EINIT instruction may continue with the locking of MRENCLAVE 312 such that its contents remain unchanged, even by the subsequent execution of an EADD or an EEXTEND instruction, and the setting of an attribute indicator in the SECS to prevent any more regions or pages from being added to the enclave. In box 434, the build of the enclave is complete.

In box 440, the enclave may be entered (e.g., by issuing an EENTER instruction) in order to securely execute a software application within the enclave. In box 432, the software application may desire to offload functionality. In box 442, the enclave requests (e.g., by issuing an EGETKEY instruction) a functionality specific key to use to offload the functionality. In box 444, the request is successful because the proper special functionality attribute bits of the SECS have been set.

In box 446, the enclave uses the functionality specific key to offload functionality to an external (outside the enclave) entity, such as the system hardware or another system that has access to the hardware key used in box 418. Box 446 may include implementing and/or performing a key-based offloading protocol established for the external entity. In box 448, the offloading is successful because the enclave has used the functionality specific key, which ensures that the offloading is authorized and secure.

In various embodiments of the present invention, the method illustrated in Figure 5 may be performed in a different order, with illustrated boxes combined or omitted, with additional boxes added, or with a combination of reordered, combined, omitted, or additional boxes. Furthermore, method embodiments of the present invention are not limited to method 500 or variations thereof. Many other method embodiments (as well as apparatus, system, and other embodiments) not described herein are possible within the scope of the present invention.

Embodiments or portions of embodiments of the present invention, as described above, may be stored on any form of a machine-readable medium. For example, all or part of method 500 may be embodied in software or firmware instructions that are stored on a medium readable by processor 110, which when executed by processor 110, cause processor 110 to execute an embodiment of the present invention. Also, aspects of the present invention may be embodied in data stored on a machine-readable medium, where the data represents a design or other information usable to fabricate all or part of processor 110.

Thus, embodiments of an invention for offloading functionality from a secure processing environment have been described. While certain embodiments have been described, and shown in the accompanying drawings, it is to be understood that such embodiments are merely illustrative and not restrictive of the broad invention, and that this invention not be limited to the specific constructions and arrangements shown and described, since various other modifications may occur to those ordinarily skilled in the art upon studying this disclosure. In an area of technology such as this, where growth is fast and further advancements are not easily foreseen, the disclosed embodiments may be readily modifiable in arrangement and detail as facilitated by enabling technological advancements without departing from the principles of the present disclosure. The invention is specified in the appended claims.

## Claims

1. A processor (200) comprising:
an instruction unit (214) to receive a first instruction, wherein the first instruction is to initialize a secure enclave, and wherein the first instruction also includes setting a functionality specific attribute bit for the secure enclave; and
an execution unit (270) to execute the first instruction, wherein execution of the first instruction includes verifying that a signature structure key matches a digital key (216) embedded in the processor to permit software running inside the secure enclave to use software or hardware to perform a function outside of the secure enclave; and
wherein the instruction unit (214) is also to receive a second instruction from within the secure enclave, and the execution unit (270) is to execute the second instruction, wherein execution of the second instruction includes providing a functionality specific key if the functionality specific attribute bit is set.

2. The processor of claim 1, wherein execution of the first instruction also includes verifying a signature structure that provides the signature structure key.

3. The processor of claim 2, wherein execution of the first instruction also includes verifying a measurement of the secure enclave.

4. The processor of claim 3, wherein the instruction unit (214) is also to receive a third instruction to create the secure enclave and the execution unit (270) is to execute the third instruction, wherein execution of the third instruction includes establishing attributes of the secure enclave.

5. The processor of claim 4, wherein the instruction unit (214) is also to receive a fourth instruction to add pages to the secure enclave and the execution unit (270) is to execute the fourth instruction.

6. The processor of claim 5, wherein the instruction unit (214) is also to receive a fifth instruction to enter the secure enclave and the execution unit (270) is to execute the fourth instruction.

7. A method comprising:
receiving a first instruction to initialize a secure enclave;
receiving a second instruction from within the secure enclave;
executing the first instruction, wherein execution of the first instruction includes:
verifying that a signature structure key matches a digital key embedded in the processor to permit software running inside the secure enclave to use software or hardware to perform a function outside of the secure enclave; and
setting a functionality specific attribute bit for the secure enclave; and
executing the second instruction, wherein execution of the second instruction includes providing a functionality specific key if the functionality specific attribute bit is set.

8. The method of claim 7, wherein execution of the first instruction also includes:
verifying a signature structure that provides the signature structure key; and
verifying a measurement of the secure enclave.

9. The method of claim 8, further comprising using, by software running within the secure enclave, the functionality specific key to implement a key-based protocol with an entity outside the secure enclave.

10. A system comprising:
a processor of any of claims 1 to 6; and
system software or hardware external to the secure enclave, the system software or hardware configured to implement a key-based protocol to provide the functionality offloaded from the processor.

11. The system of claim 10, wherein the functionality includes a cryptographic protocol.

## Patentansprüche

1. Prozessor (200), umfassend:
eine Anweisungseinheit (214) zum Empfangen einer ersten Anweisung, wobei die erste Anweisung eine sichere Enklave initialisieren soll und wobei die erste Anweisung außerdem Einstellen eines funktionalitätsspezifischen Attributbits für die sichere Enklave enthält; und
eine Ausführungseinheit (270) zum Ausführen der ersten Anweisung, wobei Ausführen der ersten Anweisung enthält, zu verifizieren, dass ein Signaturstrukturschlüssel mit einem in dem Prozessor eingebetteten digitalen Schlüssel (216) zum Gestatten, dass Software, die innerhalb der sicheren Enklave ausgeführt wird, Software oder Hardware zum Durchführen einer Funktion außerhalb der sicheren Enklave verwendet, übereinstimmt; und
wobei die Anweisungseinheit (214) außerdem eine zweite Anweisung von innerhalb der sicheren Enklave empfangen soll und die Ausführungseinheit (270) die zweite Anweisung ausführen soll, wobei Ausführen der zweiten Anweisung enthält, einen funktionalitätsspezifischen Schlüssel bereitzustellen, wenn das funktionalitätsspezifische Attributbit gesetzt ist.

2. Prozessor nach Anspruch 1, wobei Ausführen der ersten Anweisung außerdem enthält, eine Signaturstruktur zu verifizieren, die den Signaturstrukturschlüssel bereitstellt.

3. Prozessor nach Anspruch 2, wobei Ausführen der ersten Anweisung außerdem enthält, eine Messung der sicheren Enklave zu verifizieren.

4. Prozessor nach Anspruch 3, wobei die Anweisungseinheit (214) außerdem eine dritte Anweisung zum Erzeugen der sicheren Enklave empfangen soll und die Ausführungseinheit (270) die dritte Anweisung ausführen soll, wobei Ausführen der dritten Anweisung enthält, Attribute der sicheren Enklave zu erstellen.

5. Prozessor nach Anspruch 4, wobei die Anweisungseinheit (214) außerdem eine vierte Anweisung zum Hinzufügen von Seiten zu der sicheren Enklave empfangen soll und die Ausführungseinheit (270) die vierte Anweisung ausführen soll.

6. Prozessor nach Anspruch 5, wobei die Anweisungseinheit (214) außerdem eine fünfte Anweisung zum Eintreten in die sichere Enklave empfangen soll und die Ausführungseinheit (270) die vierte Anweisung ausführen soll.

7. Verfahren, umfassend:
Empfangen einer ersten Anweisung zum Initialisieren einer sicheren Enklave;
Empfangen einer zweiten Anweisung von innerhalb der sicheren Enklave;
Ausführen der ersten Anweisung, wobei Ausführen der ersten Anweisung enthält:
Verifizieren, dass ein Signaturstrukturschlüssel mit einem in dem Prozessor eingebetteten digitalen Schlüssel zum Gestatten, dass Software, die innerhalb der sicheren Enklave ausgeführt wird, Software oder Hardware zum Durchführen einer Funktion außerhalb der sicheren Enklave verwendet, übereinstimmt; und
Setzen eines funktionalitätsspezifischen Attributbits für die sichere Enklave; und
Ausführen der zweiten Anweisung, wobei Ausführen der zweiten Anweisung enthält, einen funktionalitätsspezifischen Schlüssel bereitzustellen, wenn das funktionalitätsspezifische Attributbit gesetzt ist.

8. Verfahren nach Anspruch 7, wobei Ausführen der ersten Anweisung außerdem enthält:
Verifizieren einer Signaturstruktur, die den Signaturstrukturschlüssel bereitstellt; und
Verifizieren einer Messung der sicheren Enklave.

9. Verfahren nach Anspruch 8, ferner umfassend Verwenden, durch die Software, die innerhalb der sicheren Enklave ausgeführt wird, des funktionalitätsspezifischen Schlüssels zum Implementieren eines schlüsselbasierten Protokolls mit einer Entität außerhalb der sicheren Enklave.

10. System, umfassend:
einen Prozessor nach einem der Ansprüche 1 bis 6; und
Systemsoftware oder -hardware extern der sicheren Enklave, wobei die Systemsoftware oder -hardware konfiguriert ist, ein schlüsselbasiertes Protokoll zu implementieren, um die von dem Prozessor abgeladene Funktionalität bereitzustellen.

11. System nach Anspruch 10, wobei die Funktionalität ein kryptographisches Protokoll enthält.

## Revendications

1. Processeur (200) comprenant :
une unité d'instruction (214) destinée à recevoir une première instruction, la première instruction servant à initialiser une enclave sécurisée, et la première instruction comportant également l'activation d'un bit d'attribut spécifique de fonctionnalité pour l'enclave sécurisée ; et
une unité d'exécution (270) pour exécuter la première instruction, l'exécution de la première instruction comportant la vérification qu'une clé de structure de signature correspond à une clé numérique (216) incorporée dans le processeur pour permettre à un logiciel exécuté à l'intérieur de l'enclave sécurisée d'utiliser un logiciel ou un matériel pour réaliser une fonction en dehors de l'enclave sécurisée ; et
dans lequel l'unité d'instruction (214) sert également à recevoir une deuxième instruction depuis l'enclave sécurisée, et l'unité d'exécution (270) sert à exécuter la deuxième instruction, l'exécution de la deuxième instruction comportant la fourniture d'une clé spécifique de fonctionnalité si le bit d'attribut spécifique de fonctionnalité est activé.

2. Processeur selon la revendication 1, dans lequel l'exécution de la première instruction comporte également la vérification d'une structure de signature qui fournit la clé de structure de signature.

3. Processeur selon la revendication 2, dans lequel l'exécution de la première instruction comporte également la vérification d'une mesure de l'enclave sécurisée.

4. Processeur selon la revendication 3, dans lequel l'unité d'instruction (214) sert également à recevoir une troisième instruction pour créer l'enclave sécurisée et unité d'exécution (270) sert à exécuter la troisième instruction, l'exécution de la troisième instruction comportant l'établissement d'attributs de l'enclave sécurisée.

5. Processeur selon la revendication 4, dans lequel l'unité d'instruction (214) sert également à recevoir une quatrième instruction pour ajouter des pages à l'enclave sécurisée et l'unité d'exécution (270) sert à exécuter la quatrième instruction.

6. Processeur selon la revendication 5, dans lequel l'unité d'instruction (214) sert également à recevoir une cinquième instruction pour entrer dans l'enclave sécurisée et l'unité d'exécution (270) sert à exécuter la cinquième instruction.

7. Procédé comprenant :
la réception d'une première instruction pour initialiser une enclave sécurisée ;
la réception d'une deuxième instruction depuis l'enclave sécurisée ;
l'exécution de la première instruction, l'exécution de la première instruction comportant la vérification qu'une clé de structure de signature correspond à une clé numérique incorporée dans le processeur pour permettre à un logiciel exécuté à l'intérieur de l'enclave sécurisée d'utiliser un logiciel ou un matériel pour réaliser une fonction en dehors de l'enclave sécurisée ; et
l'activation d'un bit d'attribut spécifique de fonctionnalité pour l'enclave sécurisée ; et
l'exécution de la deuxième instruction, l'exécution de la deuxième instruction comportant la fourniture d'une clé spécifique de fonctionnalité si le bit d'attribut spécifique de fonctionnalité est activé.

8. Procédé selon la revendication 7, dans lequel l'exécution de la première instruction comporte également
la vérification d'une structure de signature qui fournit la clé de structure de signature ; et
la vérification d'une mesure de l'enclave sécurisée.

9. Procédé selon la revendication 8, comprenant en outre l'utilisation, par un logiciel exécuté dans l'enclave sécurisée, de la clé spécifique de fonctionnalité pour mettre en œuvre un protocole à base de clé avec une entité extérieure à l'enclave sécurisée.

10. Système comprenant:
un processeur selon les revendications 1 à 6 ; et
un logiciel ou matériel de système externe à l'enclave sécurisée, le logiciel ou matériel de système étant configuré pour mettre en œuvre un protocole à base de clé pour fournir la fonctionnalité téléchargée depuis le processeur.

11. Système selon la revendication 10, dans lequel la fonctionnalité comporte un protocole cryptographique.
